# EUROPEAN PATENT APPLICATION

(11) **EP 2 889 278 A1**
(43) Date of publication of application: **01.07.2015**
(21) Application number: 13831357.2
(22) Date of filing: 26.04.2013
(51) Int. Cl.: C04B 33/138

(54) **METHOD FOR EXTRACTING METAL IONS FROM RED MUD USING ULTRASONIC WAVES**

(30) Priority: 23.08.2012 KR 20120092355
(71) Applicant: Lee, Chi-Hun, Busan 609-802 (KR); Ko, Mi-Nyun, Busan 609-802 (KR)
(72) Inventor: LEE, Chi-Hun, Busan 609-802 (KR); KO, Mi-NYUN, Busan 609-802 (KR)
(74) Representative: Caspary, Karsten
(86) International application number: PCT/KR2013/003622
(87) International publication number: WO 2014/030821

(57) **Abstract**

Disclosed herein is a method of effectively extracting metal ions by sonication from red med that is waste remaining after extracting aluminum from bauxite. The method comprises the steps of: (a) introducing, into a reactor placed in a constant-temperature tank, (1) a neutralized red mud slurry and an acidic solution or (2) red mud slurry, distilled water and an acidic solution, to form a red mud slurry, and heating the constant-temperature tank to allow the red mud slurry to react while sonicating the red mud slurry, thereby extracting metal ions from the red mud; and (b) filtering a product resulting from step (a) to provide a filtrate and a red mud residue, and separating and recovering the filtrate and the red mud residue, wherein the sonication in step (a) is performed using an ultrasonic generator by applying ultrasonic waves to an ultrasonic tip placed in the constant-temperature tank.

## Description

### BACKGROUND OF THE INVENTION

### Field of the Invention

The present invention relates to a method of extracting metal ions from red mud, and more particularly to a method of effectively extracting metal ions by sonication from red med that is waste remaining after extracting aluminum from bauxite.

### Description of the Prior Art

The annual worldwide discharge of red mud that remains after removal of alumina and aluminum from bauxite is over 120 million tons in sludge form and over 40 million tons and is increasing annually. In Korea, the annual discharge of red mud is 0.2 million tons in sludge form, and red mud is used in very limited applications, including brick manufacture, heavy metal removal, etc., because an effective method for treating red mud is absent. Particularly, a place for disposing of red mud is insufficient worldwide, and red mud leachate has negative impact on agricultural products and human health and causes serious environmental problems.

Particularly, red mud waste in a dry state occurs at a ratio of 1:1 relative to alumina, and thus the amount thereof is significantly large. With respect to treatment of red mud worldwide, red mud is discharged as sludge and disposed of in artificial reservoirs, artificial dams or exhausted mines, and in most maritime countries, red mud is discharged to the sea after neutralization or through pipelines. More serious problems are the annually increasing amount of red mud sludge and the pH of red mud sludge.

The amount of red mud sludge as waste is about 2-3 times larger than that of alumina extracted from bauxite. Also, red mud waste has a highly basic pH of 12-13 due to sodium hydroxide that is used when extracting aluminum from bauxite. Thus, red mud leachate causes damage to agricultural products, contaminates underground water, destroys the ecosystem, and threatens human health. Typical examples may include the red mud catastrophe which happened in Hungary in 2010, in which a large amount of red mud sludge spilled from an artificial reservoir flooded the surrounding villages and caused damage to agricultural products and humans. In some other countries, a situation similar to this catastrophe is likely to occur, and thus treatment of red mud is urgently required.

As described above, the likelihood of environmental disasters by red mud is gradually increasing, and red mud waste is being continuously accumulated to increase the severity thereof. In addition, dried red mud causes environmental problems, like red mud slurry, and particularly, red mud dust can cause air pollution.

The biggest reason why this problem has not been solved and why various applications of red mud have not been found is that metals, including iron, titanium and aluminum, which are contained in red mud, are present in the form of stable oxides, and for this reason, only some metal ions such as sodium ions (Na⁺) was extracted from red mud, and many kinds of other metal ions in red mud could not be extracted. Difficulty in extracting such metal ions significantly limits the application of red mud. In other words, if red mud itself is commercially applied, that is, if red mud is used to manufacture bricks or as concrete or construction materials, the strength of the products will be reduced due to a large amount of iron ions contained therein, or the application of the products will be limited due to a strongly basic material contained therein.

Technologies according to the prior art attempted to extract most metal ions using strong acids or high pressure and high temperature. However, in these technologies, only some metals such as sodium were extracted, and thus the resulting red mud could not be recycled. In addition, the extraction process was performed at high temperature and high pressure, and thus could not be commercially applied. Due to this limitation in the extraction of metal ions from red mud, studies have been conducted to use red mud as heave metal-treating agents or adsorbents by slightly improving the physical properties of red mud by surface treatment with organic compounds or sulfonation with sulfur. However, the commercial use of red mud in a large range of applications has not been found.

In addition, if red mud is used as construction materials, the strength of the building materials will be reduced due to their high content of iron ions. Thus, the commercial use of red mud as construction materials is limited.

Prior art documents relating to red mud include Korean Patent Registration No. 10-0460262 (published on December 14, 2004) which discloses a method of preparing artificial loess mortar using red mud and a method for applying artificial loess mortar.

### SUMMARY OF THE INVENTION

It is an object of the present invention to provide a method of extracting metal ions from red mud by sonication, which can solve environmental pollution problems caused by red mod sludge and can provide a solution to recycle industrial waste into high value-added products.

To achieve the above object, the present invention provides a method of extracting metal ions from red mud by sonication, the method comprising the steps of: (a) introducing, into a reactor placed in a constant-temperature tank, (1) a neutralized red mud slurry and an acidic solution or (2) red mud slurry, distilled water and an acidic solution, to form a red mud slurry, and heating the constant-temperature tank to allow the red mud slurry in the reactor to react while subjecting the red mud slurry to sonication, thereby extracting metal ions from the red mud; and (b) filtering a product resulting from step (a) to provide a filtrate and a red mud residue, and separating and recovering the filtrate and the red mud residue, wherein the sonication in step (a) is performed using an ultrasonic generator by applying ultrasonic waves to an ultrasonic tip placed in the constant-temperature tank.

### BRIEF DESCRIPTION OF THE DRAWINGS

FIG. 1 is a process flow chart showing a method of extracting metal ions from red mud by sonication according to an embodiment of the present invention.
FIG. 2 schematically shows an apparatus of extracting metal ions from red mud by sonication according to an embodiment of the present invention.
FIG. 3 shows the results of X-ray diffraction (XRD) analysis of dried red mud.
FIG. 4 shows the results of XRD analysis of red mud residue recovered according to a method of Example 4.
FIG. 5 shows the results of XRD analysis of a solid oxide obtained by calcining the red mud residue, recovered according to a method of Example 8, at 900 °C for 6 hours.
FIG. 6 shows the results of XRD analysis of a precipitate, formed at a pH of 7 and calcined at 900 °C for 6 hours according to a method of Example 12.
FIG. 7 shows the results of ICP analysis of metal ion-containing extracts obtained from red mud using different kinds of acids (ppm was expressed in units of gram, and the concentration (wt%) of metal ions extracted was expressed relative to 30 g (100wt%) of red mud).
FIG. 8 shows the results of ICP analysis of metal ion-containing extracts obtained from red mud at different reaction temperatures (ppm was converted into gram, and the concentration (wt%) of metal ions extracted was expressed relative to 30 g (100wt%) of red mud).
FIG. 9 shows the results of ICP analysis of metal ion-containing extracts obtained from red mud using different reaction periods (ppm was expressed in units of gram, and the concentration (wt%) of metal ions extracted was expressed relative to 30 g (100wt%) of red mud).

### DETAILED DESCRIPTION OF THE INVENTION

The advantages and features of the present invention, and the way of attaining them, will become apparent with reference to the exemplary embodiments described below in conjunction with the accompanying drawings. However, the present invention is not limited to the exemplary embodiments disclosed below and can be embodied in a variety of different forms; rather, these embodiments are provided so that this disclosure will be thorough and complete, and will fully convey the scope of the present invention to those skilled in the art. The scope of the present invention will be defined by the appended claims. Like reference numerals refer to like elements throughout the specification and the accompanying figures.

The present invention provides a solution to solve environmental problems resulting from red mud by recycling red mud into various commercial products and provides a method of extracting metal ions from red mud.

In an experimental process for extracting metal ions from red mud, strong acid was used to extract iron (Fe), titanium (Ti) and aluminum (Al) cations, which are most abundantly present in red mud. Water and strong acid were used at a volume ratio of 1:1 - 1:10 in view of neutralization to be performed later. The extraction of metal ions was performed for 3 hours or more while maintaining the internal temperature of the constant-temperature tank 50-100 °C and applying ultrasonic waves. Metal ions, including iron ions, were extracted slowly, and after about 3-4 hours, large amounts of metal ions started to be extracted, and after 5-8 hours, most metal ions, including iron, titanium, aluminum, calcium, sodium and potassium, were extracted.

The amount of metal ions extracted increased as the extraction reaction temperature increased and the ratio of strong acid to red mud increased, but suitable conditions were selected in view of steps to be performed later and commercial economy.

Thus, according to the present invention, metal ions extracted from red mud can be used to prepare various metal ion compounds, and red mud residue having changed physical properties and chemical composition, which remains after extraction of metal ions, can be heated at high temperature to provide various materials, including heat-resistant materials, catalysts, cement, construction materials, etc. Thus, the present invention provides a method making it possible to recycle red in various applications.

In addition, according to the present invention, the chemical composition of red mud can be changed by extracting metal ions from the red mud, and the extracted metal ions can be used to synthesize various materials. Thus, the present invention provides a method making it possible to chemically treat red mud. In addition, in the present invention, a method for extracting metal ions from red mud was developed by finding a method for completely chemically treating red mud, and most metal ions in red mud were extracted using an optimal combination of sonication conditions, reaction temperature conditions and the content ratio of strong acid.

It was found that, when extraction of metal ions from red mud is performed using strong acid alone without sonication, a very small amount of metal ions are extracted, and only when sonication is performed in a constant-temperature tank at a temperature of 50 °C or higher, and preferably 50-100 °C, metal ions can be effectively extracted.

Hereinafter, a method of extracting metal ions from red mud by sonication according to a preferred embodiment of the present invention will be described in detail with reference to the accompanying drawings.

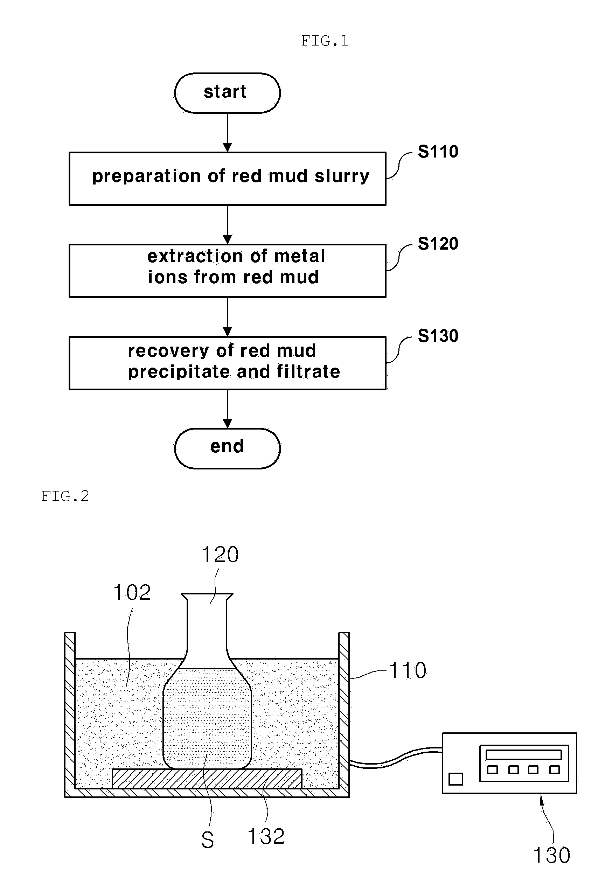

FIG. 1 is a process flow chart showing a method of extracting metal ions from red mud powder by sonication according to an embodiment of the present invention, and FIG. 2 schematically shows an apparatus of extracting metal ions from red mud powder by sonication according to an embodiment of the present invention.

Referring to FIGS. 1 and 2, a method of extracting metal ions from red mud powder by sonication according to an embodiment of the present invention comprises the steps of: (S110) of preparing a red mud slurry; (S120) extracting metal ions from the red mud slurry; and (S130) recovering a red mud precipitate and a filtrate.

### Preparation of red mud slurry

When a strongly basic red mud slurry discharged from an aluminum extraction process or the like is directly used, it is neutralized with strong acid, and then an acidic solution is added thereto to render the red mud acidic. However, when red mud is in the form of powder, the method of extracting metal ions from red mud may further comprise step (S110) of preparing a red mud slurry by mixing red mud powder, an acidic solution and distilled water in a reactor 120 placed in a constant-temperature tank 110.

Herein, the acidic solution may contain one or a mixture of two or more selected from the group consisting of sulfuric acid, hydrochloric acid, nitric acid and aqua regia (a mixture of hydrochloric acid and nitric acid). If sulfuric acid is used, the highest extraction efficiency is obtained as described below. In the extraction experiment, the following reagents were used: sulfuric acid (H₂SO₄ 95%, Junsei Chemicals, Japan), nitric acid (HNO₃, 65%, DUKSAN reagents, Korea), hydrochloric acid (HCl, 35%, Matsunoen Chemicals, Japan), ion exchange water, red mud (KC Co., Ltd. Korea). Strong acid was used intact. The results of the experiment indicated that the use of sulfuric acid showed the highest extraction efficiency.

In this step, red mud slurry or powder and the acidic solution is preferably mixed at a weight ratio of 1 : 1 - 1 : 20. If the mixing ratio between red mud and the acidic solution is less than 1: 1, the extraction of metal ions will be insufficient because the ratio of the acidic solution is relatively low. On the other hand, if the mixing ratio between red mud and the acidic solution exceeds 1: 20, the efficiency of extraction will be increased, but the amount of a base that is used to neutralize the recovered filtrate will increase, resulting in an increase in the extraction cost.

Meanwhile, the acidic solution and distilled water are preferably mixed at a volume ratio of 1 : 1 - 1 : 10. If the mixing ratio between the acidic solution and distilled water is less than 1: 1, the amount of a base that is used to neutralize the recovered filtrate will increase, resulting in an increase in the extraction cost. On the other hand, if the mixing ratio between the acidic solution and distilled water exceeds 1: 10, the efficiency of extraction will decrease, because the content of the acidic solution relatively decreases when the amount of red mud is large.

### Extraction of metal ions from red mud

In step (S120) of extracting metal ions from red mud, the constant-temperature is heated to allow the red mud slurry (S) in the reactor 120 to react, while the slurry is sonicated to extract metal ions from the red mud.

Particularly, sonication that is most important in the extraction of metal ions from red mud is preferably performed at a frequency of 30-50 kHz and a power of 260-300 W, and the reaction is preferably performed at 50-100 °C for 3 hours or more. If the reaction is performed for more than 10 hours, no significant increase in the efficiency of extraction will be obtained, and the amount of titanium extracted into the extraction solution will gradually increase to reduce the titanium content of the red mud residue, and thus the red mud residue will not be effectively used as a photocatalyt.

The present inventors have found that, when no sonication was performed, metal ions were not extracted even in the presence of strong acid, whereas, when sonication was performed, metal ions started to be extracted in the presence of various strong acids. In addition, it was found that the rate of extraction increased as the concentration of strong acid added and the internal temperature of the constant-temperature tank increased. Particularly, in view of a process of producing products from the red mud residue, strong acid was used in the smallest possible amount in order to minimize the amount of a base that is used to neutralize strong acid.

In this step, the action of sonication that is performed during the extraction of metal ions is very important. It is known that the intensity of cavitation bubbles that are produced during sonication decreases when the temperature of water is higher than 40 °C. However, in the present invention, it was found that it is preferable to perform extraction at a temperature of 50-100 °C, which is higher than 40 °C, in order to promote the primary activation step for increasing the reactivity of metal ions with acid and promote the subsequent main reaction with acid.

Particularly, when sonication is performed according to the present invention, vibration is generated by cavitation bubbles produced by sonication, and the frequency of contact between metal ions in red mud and strong acid is increased by strong stirring of the red mud slurry (S) and strong acid, thereby inducing smooth extraction of metal ions from the red mud. In this extraction, the reactivity between acid and metal ions increases as the reaction temperature increases, thereby extracting metal ions. Thus, in the reaction that extracts metal ions from red mud, the vibrating effect of cavitation bubbles generated by sonication and the reaction between red mud and strong acid at a slightly high temperature of 50∼100 °C exhibit a synergistic effect, whereby metal ions can be effectively extracted from red mud.

Herein, sonication is preferably performed by using an ultrasonic generator 130 by applying a predetermined frequency and power to an ultrasonic tip 132 placed in the constant-temperature tank 110.

Although the ultrasonic tip 132 may be placed on the inner wall surface or inner central portion of the constant-temperature tank 110, high extraction efficiency is obtained when the ultrasonic tip 132 is disposed between the bottom of the reactor 120 and the constant-temperature tank 110.

In this step, if sonication is performed at a power of less than 260 W, it will be difficult to extract most metal ions from red mud. On the other hand, sonication is performed at a power of more than 300 W, the reactor 120 made of glass can be damaged. To overcome this problem, a constant-temperature tank made of SUS may also be used without a separator reactor, so that the extraction reaction is performed directly in the constant-temperature tank by applying a power of 300-500 W, which is higher than the above-described power range.

In this step, if the reaction temperature is lower than 50 °C or the reaction time is shorter than 3 hours, the reaction between metal ions in red mud and strong acid will be insufficient, and thus it will be difficult to extract all metal ions from red mud. On the other hand, if the reaction temperature is higher than 100 °C or the reaction time is longer than 10 hours, the amount of metal ions extracted slightly will increase, but the process time and the extraction cost will excessively increase.

### Recovery of red mud residue and filtrate

In step (S130) of recovering the red mud residue and the filtrate, the product resulting from step (S120) of extracting metal ions from red mud is filtered from red mud, and the red mud residue and the metal extract filtrate are separated and recovered.

As used herein, the term "extract filtrate" can be defined as a metal ion-containing solution excluding the red mud residue. In this step, the filtration may be performed using a filter or by centrifugation.

Although not shown in the figure, the method of extracting metal ions by sonication according to the embodiment of the present invention may further comprise, after extraction of metal ions from red mud, a red mud residue-obtaining step (not shown) and a calcination step (not shown).

### Obtaining of red mud residue

In the step of obtaining the red mud residue, the recovered red mud residue is washed, and the washed red mud precipitate is dried at a temperature of 50-70 °C for 6 hours or more, thereby obtaining solid red mud. Herein, the washing is performed 3-5 times using distilled water.

### Calcination

In the calcination step, the red mud residue is calcined at a temperature of 900 °C for 4 hours or longer in order to obtain an oxide having a new composition. In an example of the present invention, the red mud residue was calcined at 900 °C for 6 hours.

The above-described method of extracting metal ions from red mud by sonication according to the embodiment of the present invention is a method of extracting most metal ions from red mud waste remaining after extracting aluminum from bauxite. This method has an advantage in that metal ions in red mud can be effectively extracted using an optimal combination of sonication, strong acid and the controlled temperature of the constant-temperature tank.

In addition, the method of extracting metal ions from red mud by sonication according to the present invention has advantages in that the extraction can be performed at a relatively low temperature and the extraction process is simple. Thus, when the method of extracting metal ions according to the present invention is used, extracted metal ions and the red mud residue remaining after the extraction of metal ions can be commercially used, and the solid red mud remaining after the extraction of metal ions can be commercially used in various applications due to the changed physical properties and chemical composition thereof. In other words, a large amount of iron ions that limit the use of red mud are mostly extracted, and thus the red mud residue contains silicon and titanium as its main components and can be used in various fields, including the construction field and the environmentally friendly field. In addition, when dried mud red is reacted with strong acid in distilled water at a temperature of 50-100 °C while being sonicated, metal ions are extracted from the red mud. The extract comprising metal ions contains iron, titanium and aluminum as its main components, and thus can be recycled. Also, from metal ions extracted by this extraction process, metals can be recovered and various compounds can be synthesized, suggesting that red mud can be completely recycled. In addition, because the extracted metal ion solution is a strongly acidic solution, this acidic solution can be neutralized to a pH of 7 by addition of a basic material such as ammonia water or a sodium hydroxide solution to form a precipitate, so that the resulting waste solution can be easily treated in subsequent processes.

### Examples

Hereinafter, the present invention will be described in detail with reference to examples. It is to be understood, however, that these examples are for illustrative purposes only and are not intended to limit the scope of the present invention in any way.

The contents that are not described herein can be technically analogized by those skilled in the art, and thus the description thereof will be omitted.

### 1. Experimental method

### Example 1

In a 2-L Erlenmeyer flask placed in a constant-temperature tank, 30 g of red mud and 900 ml of distilled water were introduced and 225 ml of hydrochloric acid (HCl) and 75 ml of nitric acid were added and mixed therewith. Then, the constant-temperature tank was heated to 75 °C, and in this state, the contents in the reactor were reacted for 6 hours while they were sonicated at a frequency of 36.7 kHz and a power.

Then, the reaction product was filtered, and the red mud residue and the filtrate were separated and recovered. The recovered red mud residue was washed with distilled and dried at 60 °C for 12 hours. The filtrate containing the extracted metal ions was analyzed using ICP (PerkinElmer, OPTIMA 2100DV).

### Example 2

The procedure of Example 1 was repeated, except that 300 ml of hydrochloric acid (HCl, 35%) was used instead of the hydrochloric acid/nitric acid mixture as the acidic solution.

### Example 3

The procedure of Example 1 was repeated, except that 300 ml of nitric acid (HNO₃, 65%) was used instead of the hydrochloric acid/nitric acid mixture as the acidic solution.

### Example 4

The procedure of Example 1 was repeated, except that 300 ml of sulfuric acid (H₂SO₄, 95%) was used instead of the hydrochloric acid/nitric acid mixture as the acidic solution.

Herein, because 1 ml of sulfuric acid corresponds to 1.83 g in view of density, 1.83 g of sulfuric acid is used per g of red mud, and thus the weight ratio of red mud: sulfuric acid is 1: 18.3.

### Example 5

The procedure of Example 4 was repeated, except that the reaction was performed at 55 °C for 6 hours after heating the constant-temperature tank.

### Example 6

The procedure of Example 4 was repeated, except that the reaction was performed at 65 °C for 6 hours after heating the constant-temperature tank.

### Example 7

The procedure of Example 4 was repeated, except that the reaction was performed at 85 °C for 6 hours after heating the constant-temperature tank.

### Example 8

The procedure of Example 4 was repeated, except that the reaction was performed at 85 °C for 8 hours after heating the constant-temperature tank.

### Example 9

The procedure of Example 4 was repeated, except that the reaction was performed at 85 °C for 9 hours after heating the constant-temperature tank.

### Example 10

The procedure of Example 4 was repeated, except that the reaction was performed at 85 °C for 12 hours after heating the constant-temperature tank.

### Example 11

In an Erlenmeyer flask placed in a constant-temperature tank, 30 g of red mud and 900 ml of distilled water were introduced and 300 ml of sulfuric acid (H₂SO₄) was added and mixed therewith. Then, the constant-temperature tank was heated to 75 °C, and in this state, the contents in the reactor were reacted for 6 hours while they were sonicated at a frequency of 36.7 kHz and a power.

Then, the reaction product was filtered, and the red mud residue and the filtrate were separated and recovered. The recovered red mud residue was washed with distilled and dried at 60 °C for 12 hours.

The dried red mud residue was calcined at 900 °C for 6 hours to obtain a red mud oxide.

### Example 12

The extract containing metal ions extracted in Example 4 was a strongly acidic solution, and thus was neutralized at a pH of 7 by addition of ammonia water or a sodium hydroxide solution to form a precipitate, and the resulting solution had a pH of 7. The precipitate formed at a pH of 7 was calcined at 900 °C for 6 hours to obtain an iron-containing oxide.

### 2. Evaluation of physical properties

Table 1 below shows the results of analyzing the extract filtrates, obtained in Examples 1 to 4, by ICP-MS (inductively coupled plasma mass spectrometer). Particularly, Table 1 shows the results of the experiments performed using different kinds of strong acids in order to examine the effects of strong acids on the extraction of metal ions.

**Table 1 (unit: mg/L)**

| | **Example 1** | **Example 2** | **Example 3** | **Example 4** |
|---|---|---|---|---|
| **Fe** | 3836 | 3898 | 2417 | 4724 |
| **Al** | 1007 | 1023 | 1010 | 1767 |
| **Ti** | 357.1 | 356.6 | 367.7 | 482.2 |
| **Na** | 615.1 | 647.2 | 704.2 | 830.7 |
| **Ca** | 548.5 | 626.5 | 629.0 | 452.1 |
| **K** | 173.7 | 184.3 | 188.1 | 214.2 |
| **Mg** | 63.58 | 69.32 | 70.62 | 104.1 |
| **Cu** | 13.18 | 13.31 | 13.17 | 13.56 |
| **Pb** | 2.058 | 3.248 | 0.770 | 2.984 |

As can be seen in Table 1 above, the results of ICP-MS analysis indicated that the amount of metal ions extracted was the largest in Example 4 in which sulfuric acid was used as the acidic acid solution. Also, the amount of metal ions extracted was the second largest in Example 1 (using aqua regia (hydrochloric acid/nitric acid mixture)) and the third highest in Example 2 (using hydrochloric acid). In addition, the amount of metal ions extracted was the smallest in Example 3 (using nitric acid). This suggests that aqua regia, hydrochloric acid or sulfuric acid is a strong acid effective for extraction of metal ions, including iron. However, it was found in subsequent experiments that sulfuric acid was most effective in view of the effect of chlorine ions on the synthesis of other materials from the metal ion solution and that extraction with sulfuric acid had no significant effect on the synthesis of other materials after the extraction of metal ions.

In other words, when extraction of metal ions from red mud was performed using strong acid alone without sonication, metal ions could not be extracted.

The above results indicate that, when the extraction of metal ions from red mud is performed using strong acid without sonication, little or no metal ions were extracted, and sonication is necessarily required to extract metal ions from red mud by strong acid, and metal ions started to be extracted only when the internal temperature of the constant-temperature tank is increased to 50 °C higher. When sonication was performed in the extraction process, iron, aluminum and titanium ions, which are major metal ions, were extracted with the four kinds of strong acids, but extraction with nitric acid showed the lowest extraction efficiency.

Particularly, with respect to the efficiency of extraction of iron, aluminum and titanium ions, which are major metal ions, sulfuric acid was higher than other strong acids, suggesting that it is most efficient to use sulfuric acid for the extraction of metal ions.

The presence of chlorine ions (Cl⁻) in the process of neutralizing the metal ion-containing extract with a base in order to use it influences subsequent processes (such as formation of a precipitate) and makes it difficult to remove chlorine ions (Cl⁻) by washing. For this reason, sulfuric acid having extraction efficiency higher than aqua regia or hydrochloric acid was used in experiments. Because sulfuric acid has less effect on subsequent reactions compared to chlorine ions, sulfuric acid was used as a major extraction acid in the present invention.

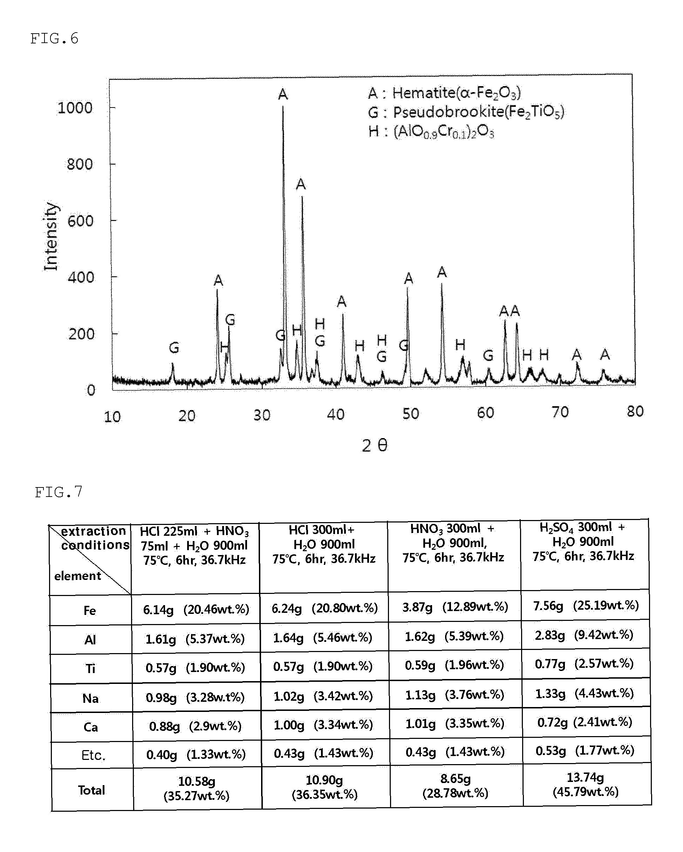

The results of ICP analysis of extracts obtained from 30 g of red mud using various acids were expressed in units of gram and shown in FIG. 7. As can be seen in FIG. 7, the use of sulfuric acid was the best in terms of extraction efficiency.

As can be seen in Table 1 and FIG. 7, in the extracts obtained by extraction with sulfuric acid, the content of iron ions was the highest among metal ions, and major metal ions, including iron, aluminum, titanium and calcium, were extracted from red mud. In the metal ion-containing extract, the content of iron ions was the highest, and the contents of aluminum and titanium were the second highest. Thus, the extract can be used to prepare catalysts, and because the extract has a high content of iron ions, it can be used to prepare various materials, including iron oxide, pottery materials, ceramic ware, etc. Accordingly, metal ions obtained by extraction from red mud can be used to prepare various products, and the red mud residue remaining after the extraction of metal ions can be used as construction materials and the like, suggesting that red mud can be recycled.

Table 2 below shows the results of ICP-MS analysis of the extract filtrates obtained in Examples 4 to 7. Particularly, Table 2 shows the results of the experiments performed at different reaction temperatures in order to examine the effect of reaction temperature on the extraction of metal ions.

**Table 2 (unit: mg/L)**

| | **Example 4** | **Example 5** | **Example 6** | **Example 7** |
|---|---|---|---|---|
| **Fe** | 4724 | 3981 | 4453 | 5207 |
| **Al** | 1767 | 1155 | 1429 | 2173 |
| **Ti** | 482.2 | 339 | 367.4 | 520.2 |
| **Na** | 830.7 | 799.1 | 888.8 | 787.2 |
| **Ca** | 452.1 | 471.8 | 242.6 | 352.8 |
| **K** | 214.2 | 183.4 | 194.2 | 186.4 |
| **Mg** | 104.1 | 68.65 | 85.52 | 78.22 |
| **Cu** | 13.56 | 13.46 | 13.28 | 13.30 |
| **Pb** | 2.984 | 0.843 | 2.859 | 3.303 |

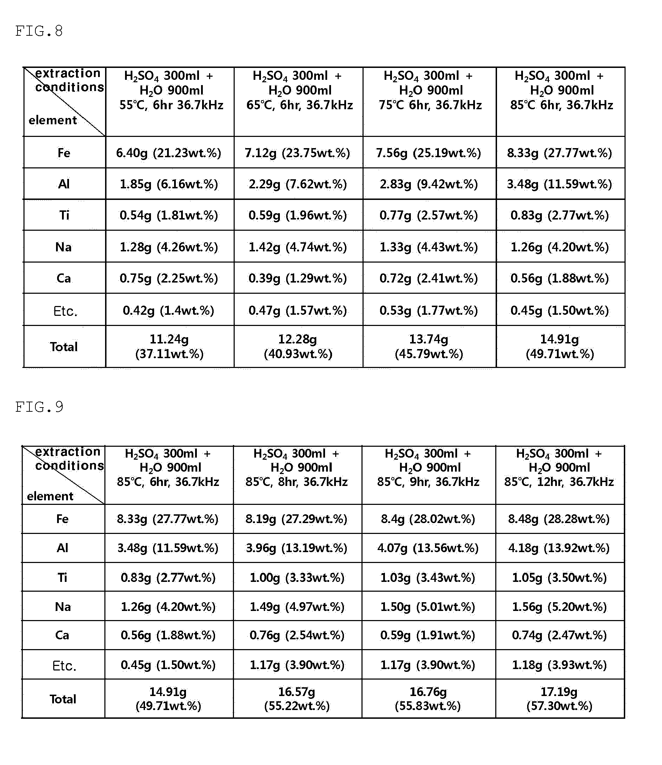

The results of ICP analysis of the extracts obtained at varying reaction temperatures were expressed in units of gram and shown in FIG. 8. As can be seen in FIG. 8, the extraction efficiency increased as the internal temperature of the constant-temperature tank increased.

As can be seen in Table 2 and FIG. 8, when extraction with sulfuric acid was performed using sonication as described in Examples 4 to 7, most metal ions were extracted in all Examples 4 to 7, even though the amount of metal ions extracted did differ depending on the temperature of the constant-temperature tank.

In other words, it can be seen that the extraction of iron, aluminum and titanium ions, which are the major components of red mud, increases as the extraction temperature increases, suggesting that the rate of extraction is significantly influenced by the reaction temperature. Also, it can be seen that the extraction efficiency increases as the extraction temperature increases.

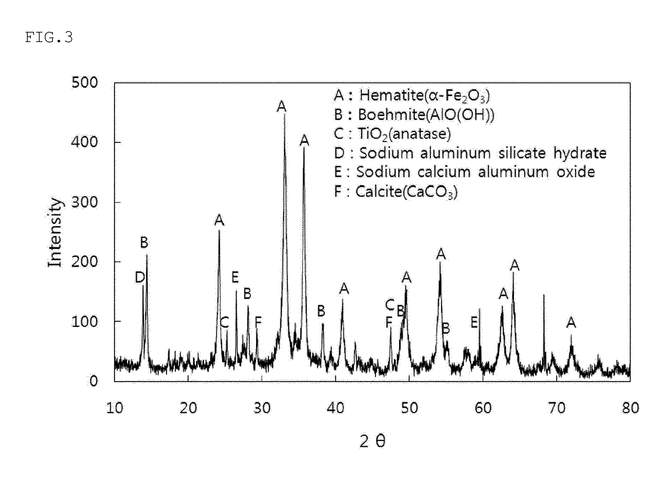

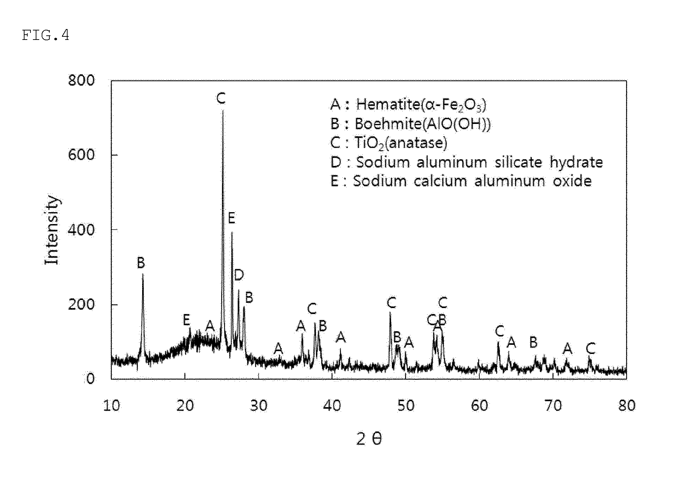

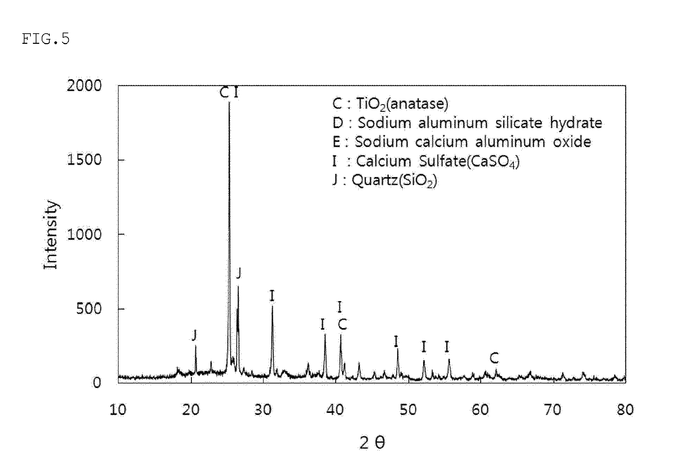

Table 3 below shows the results of analyzing the red mud residues, recovered by the methods of Examples 4 to 7, using XRF (X-ray fluorescence spectrometer, Model XRF-1700, SHIMADZU, Japan). FIG. 3 shows the results of XRD (X-ray diffraction) analysis of dry red mud for comparison; FIG. 4 shows the results of XRD analysis of the red mud residue recovered by the method of Example 4 and dried at 70 °C; and FIG. 5 shows the results of XRD analysis of the red mud residue recovered by the method of Example 11 and calcined at 900 °C for 6 hours. Herein, the XRD analysis was performed using a Rigaku diffractometer (Model D/MAX 2500, Rigaku, Japan), and XRD patterns were obtained using Cu K_{α} (λ=1.5404 Å).

**Table 3 (unit: wt%)**

| | **Fe₂O₃** | **Al₂O₃** | **SiO₂** | **TiO₂** | **Na₂O** | **CaO** | **Others** |
|---|---|---|---|---|---|---|---|
| **Red mud** | 35.5 | 23.7 | 14.3 | 8.8 | 8.6 | 7.8 | 1.3 |
| **Example 4** | 3.7 | 18.2 | 49.6 | 12.3 | - | 15.4 | 0.8 |
| **Example 5** | 7.8 | 33.0 | 44.5 | 12.0 | - | 2.2 | 0.5 |
| **Example 6** | 6.0 | 27.1 | 40.1 | 14.0 | 0.7 | 11.4 | 0.7 |
| **Example 7** | 2.5 | 7.8 | 53.7 | 14.6 | - | 20.4 | 1.0 |

As can be seen in Table 3 above, the results of XRD indicated that the Fe₂O₃ contents of the red mud residues recovered by the methods of Examples 4 to 7 were significantly low, suggesting that most iron ions were extracted.

As can be seen in FIG. 4, the composition of the red mud residue recovered by the method of Example 4 showed peaks different from those in FIG. 3, suggesting that metal ions in red mud were extracted to change the chemical composition of the red mud. Like the case of Table 3, the peak of α-Fe₂O₃ decreased abruptly, and the peak of TiO₂ (anatase) relatively increased.

Referring to FIG. 5, the results of XRD analysis of the solid red mud residue recovered by the method of Example 11 indicated that TiO₂, SiO₂, Al₂O₃, CaSO₄ and Fe₂O₃ remained as oxides and the peak of α-Fe₂O₃ decreased abruptly compared to that of the red mud before extraction, suggesting that most iron ions were extracted. In addition, it can be seen that the red mud residue after extraction contained SiO₂, Al₂O₃, CaSO₄ and TiO₂ as its main components, suggesting that it can be used as various construction materials and catalysts.

In addition, the results of ICP analysis of the extracts obtained from 30 g of red mud at varying temperatures using different reaction periods were expressed in units of gram and shown in FIG. 8.

As can be seen in FIG. 9, the rate of extraction increased as the reaction time increased, and when the reaction time was longer than 8 hours, an increase in the rate of extraction was insignificant. Also, the rate of rate was more than 50%, suggesting that about 1/2 of metal ions in the red mud were extracted. In addition, the chemical composition of the red mud was completely changed, suggesting that red mud can be completely recycled.

From the results of such extraction experiments, it can be seen that the peaks of TiO₂, Al₂O₃ and SiO₂ are relatively large, and such results are consistent with the results of XRD analysis.

As can be seen from the above results of the extraction experiments, the content of metal ions (particularly iron ions) extracted can be controlled by controlling the extraction reaction conditions, and when the amount of iron ions extracted is small, that is, if the content of iron ions in the red mud residue is high, the red mud residue will be changed to an orange color when being calcined. If the amount of iron ions extracted is large, the red mud residue will be changed to a light orange color when being calcined. Thus, the color of red mud residue can be controlled by changing the iron content. As described above, red mud residue can be used in various applications by controlling the amount of iron ions extracted therefrom.

As described in Example 12, the metal ion-containing extract was strongly acidic, because it was obtained by extraction with strong acid. Thus, the extract was neutralized to a pH of 7 by addition of ammonia water or a sodium hydroxide solution to form a precipitate, and the supernatant having a pH of 7 could be treated. The results of XRD analysis of the precipitate are shown in FIG. 6. As can be seen in FIG. 6, most iron ions were precipitated. When this neutralization to a pH of 7 is performed, a process for treating a large amount of red mud can be shortened and simplified.

Thus, according to the present invention, the ratio of iron ions to silicon ions in red mud residue remaining after extraction can be controlled by changing the amount of iron ions extracted, depending on the intended use of the red mud residue.

In addition, a thermally stable orange colored oxide obtained by controlling the amount of iron ions extracted can be used in colored bricks, pigments, adsorbents and the like. In addition, red mud residue remaining after extraction of a large amount of iron ions contains large amounts of SiO₂ and TiO₂, and thus can be used in various applications, including high-strength bricks, adsorbents, filters, catalysts, construction materials such as cement or grout, etc.

Calcium ions were not sufficiently washed out during washing of sulfuric acid, and thus were precipitated as calcium sulfate that was then converted into calcium oxide. For this reason, a large amount of calcium oxide was detected. However, calcium ions can be somewhat removed by sufficient washing. As described above, according to the present invention, most iron ions in red mud are extracted, and thus when the red mud residue is chemically converted into a heat-resistant oxide comprising silicon, titanium and aluminum, it can be used in various materials, including cement, catalysts, high-strength concrete, heat-resistant materials showing a photocatalytic function by titanium, etc.

In addition, as can be seen in the composition remaining after extraction of metal ions, most iron ions were extracted from red mud, and the solid red mud residue contained silicon as its main compound, suggesting that the solid red mud residue has a completely changed chemical composition and has increased strength, heat resistance and flame resistance compared to the original red mud, and thus can be used in various applications.

As described above, the method of extracting metal ions from red mud by sonication according to the present invention is a method of extracting most metal ions from red mud waste remaining after extracting aluminum from bauxite. This method has an advantage in that metal ions in red mud can be effectively extracted using an optimal combination of sonication, strong acid and the controlled temperature of the constant-temperature tank.

In addition, the method of extracting metal ions from red mud by sonication according to the present invention has advantages in that the extraction can be performed at a relatively low temperature and the extraction process is simple. Thus, when the method of extracting metal ions according to the present invention is used, extracted metal ions and the red mud residue remaining after the extraction of metal ions can be commercially used, and the solid red mud remaining after the extraction of metal ions can be commercially used in various applications due to the changed physical properties and chemical composition thereof. In addition, when dried mud red is reacted with strong acid in distilled water at a temperature of 50-100 °C while being sonicated, metal ions are extracted from the red mud. The extract comprising metal ions contains iron, titanium and aluminum as its main components, and thus can be used to prepare various products. Also, from metal ions extracted by this extraction process, metals can be recovered and various compounds can be synthesized.

In addition, metal ions, obtained by the inventive method of extracting metal ions from red mud by sonication, and red mud residue remaining after extraction of the metal ions, can be used to various materials, including heat-resistant pigments, ceramic materials, heat-resistant bricks, concrete, cement, loess, pottery materials, iron compounds, catalysts, construction materials, etc.

Particularly, according to the present invention, most metal ions in red mud can be extracted, and the amount of metal ions extracted can be controlled, thereby providing products having controlled components and properties. In addition, the red mud residue remaining after extraction of metal ions can be used in various applications due to the changed physical properties thereof.

Accordingly, the metal ion-containing extract can be used to synthesize various iron compounds, catalysts and the like, and the red mud residue remaining after extraction of metal ions can be calcined at high temperature to provide heat-resistant materials. Thus, according to the present invention, red mud waste can be recycled to solve environmental problems resulting from red mud and can also be applied as various high-value-added products.

Although the preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. A method of extracting metal ions from red mud by sonication, the method comprising the steps of:
(a) introducing, into a reactor placed in a constant-temperature tank, (1) a neutralized red mud slurry and an acidic solution or (2) red mud slurry, distilled water and an acidic solution, to form a red mud slurry, and heating the constant-temperature tank to allow the red mud slurry in the reactor to react while subjecting the red mud slurry to sonication, thereby extracting metal ions from the red mud; and
(b) filtering a product resulting from step (a) to provide a filtrate and a red mud residue, and separating and recovering the filtrate and the red mud residue,
wherein the sonication in step (a) is performed using an ultrasonic generator by applying ultrasonic waves to an ultrasonic tip placed in the constant-temperature tank.

2. The method of claim 1, wherein the neutralized red mud slurry or the red mud slurry and the acidic solution are mixed at a weight ratio of 1:1-1:20, and the acidic solution and distilled water are mixed at a volume ratio of 1:1-1:10.

3. The method of claim 1, wherein the ultrasonic tip is disposed between the bottom of the constant-temperature tank and the bottom of the reactor.

4. The method of claim 1, wherein the acidic solution is sulfuric acid.

5. The method of claim 1, wherein the reaction in step (a) is performed at a temperature of 50-100 °C for 3 hours or more.

6. The method of claim 1, wherein the sonication is performed at a frequency of 30-50 kHz and at a power of (i) 260-300 W or (ii) 300-500 W when the reaction is performed directly in the constant-temperature tank without a separate reactor.

7. The method of claim 1, wherein the filtrate in step (b) is a metal ion-containing solution excluding the red mud residue.

8. The method of claim 1, wherein the time and temperature of the reaction in step (a) are controlled to change the composition of each of the red mud residue and the filtrate so that the red mud residue and the filtrate are used in various applications.

9. The method of claim 1, further comprising the step of calcinating the red mud residue at a temperature of 900 °C for 4 hours or longer in order to obtain an oxide having a new composition.

## Amended claims

### Amended claims under Art. 19.1 PCT

1. A method of extracting metal ions from red mud by sonication, the method comprising the steps of:
(a) introducing, into a reactor placed in a constant-temperature tank, (1) a neutralized red mud slurry and an acidic solution or (2) red mud slurry, distilled water and an acidic solution, to form a red mud slurry, and heating the constant-temperature tank to allow the red mud slurry in the reactor to react while subjecting the red mud slurry to sonication, thereby extracting metal ions from the red mud; and
(b) filtering a product resulting from step (a) to provide a filtrate and a red mud residue, and separating and recovering the filtrate and the red mud residue,
wherein the sonication in step (a) is performed using an ultrasonic generator by applying ultrasonic waves to an ultrasonic tip placed in the constant-temperature tank, and
wherein the neutralized red mud slurry or the red mud slurry and the acidic solution are mixed at a weight ratio of 1:1-1:20, and the acidic solution and distilled water are mixed at a volume ratio of 1:1-1:10.

2. The method of claim 1, wherein the ultrasonic tip is disposed between the bottom of the constant-temperature tank and the bottom of the reactor.

3. The method of claim 1, wherein the reaction in step (a) is performed at a temperature of 50-100 °C for 3 hours or more.

4. The method of claim 1, wherein the sonication is performed at a frequency of 30-50 kHz and at a power of (i) 260-300 W or (ii) 300-500 W when the reaction is performed directly in the constant-temperature tank without a separate reactor.

5. The method of claim 1, wherein the time and temperature of the reaction in step (a) are controlled to change the composition of each of the red mud residue and the filtrate so that the red mud residue and the filtrate are used in various applications.
